# EUROPÄISCHE PATENTANMELDUNG

(11) **EP 4 089 595 A1**
(43) Veröffentlichungstag der Anmeldung: **16.11.2022**
(21) Anmeldenummer: 21173356.3
(22) Anmeldetag: 11.05.2021
(51) Int. Cl.: G06N 20/20, G06N 3/08, G08B 29/00

(54) **COMPUTER-IMPLEMENTIERTES VERFAHREN ZUM BEREITSTELLEN EINES TRAINIERTEN MASCHINELLEN LERNMODELLS ZUR ERKENNUNG MINDESTENS EINES EREIGNISSES IN BEZUG AUF EIN TECHNISCHES SYSTEM**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein computer-implementiertes Verfahren zum Bereitstellen eines trainierten maschinellen Lernmodells zur Erkennung mindestens eines Ereignisses in Bezug auf ein technisches System; aufweisend die Schritte: a. Bestimmen einer Mehrzahl von statistischen Ausgabewerten durch Anwenden einer Mehrzahl von unterschiedlichen statistischen Ansätzen auf einen Trainingsdatensatz für ein maschinelles Lernmodell (S1); wobei der Trainingsdatensatz mindestens eine Zeitreihe oder mindestens einen Zeitreihenabschnitt mindestens einer Zeitreihe mit einer Mehrzahl von Messwerten einer bestimmten physikalischen Größe aufweist; b. Kombinieren der Mehrzahl der statistischen Ausgabewerte mittels einer Entscheidungsregel in mindestens ein statistisches Label (S2); c. Kennzeichnen der mindestens einen Zeitreihe oder des mindestens einen Zeitreihenabschnitts der mindestens einen Zeitreihe des Trainingsdatensatzes mit dem mindestens einem zugehörigen statistischen Label (S3); wobei das mindestens eine zugehörige statistische Label das mindestens eine Ereignis in Bezug auf das technische System kennzeichnet; d. Trainieren des maschinellen Lernmodells auf Basis des gelabelten Trainingsdatensatzes zur Erkennung des mindestens einen Ereignisses in Bezug auf das technische System (S4); und e. Bereitstellen des trainierten maschinellen Lernmodells (S5). Ferner ist die Erfindung auf ein entsprechendes technisches System und Computerprogrammprodukt gerichtet.

## Beschreibung

### 1. Technisches Gebiet

Die Erfindung betrifft ein computer-implementiertes Verfahren zum Bereitstellen eines trainierten maschinellen Lernmodells zur Erkennung mindestens eines Ereignisses in Bezug auf ein technisches System. Ferner betrifft die Erfindung ein entsprechendes technisches System sowie Computerprogrammprodukt.

### 2. Stand der Technik

Die Ereigniserkennung digitaler technischer Systeme gewinnt im Hinblick auf die fortschreitende Digitalisierung zunehmend an Bedeutung. Durch die zuverlässige Ereigniserkennung, insbesondere Erkennung kritischer oder sicherheitskritischer Ereignisse, können Gefahren sowie Schäden zumindest verringert oder vollständig verhindert werden. Ferner können auch bereits eingetretene Schäden minimiert oder abgewendet werden.

Beispielsweise gehen solche Gefahren oder Schäden von einer Interaktion zwischen Mensch und einem technischen System aus, wie ein technisches System im Bereich des maschinellen Lernens ("machine learning systems"), einer Industrieanlage oder einer Robotereinheit aus. Die Anzahl der Interaktionen und deren Komplexität steigen mit der fortschreitenden Digitalisierung.

Üblicherweise werden für die Ereigniserkennung gemäß dem Stand der Technik einzelne statistische Ansätze verwendet. Nachteilig daran ist jedoch, dass die einzelnen statistischen Ansätze nur bestimmte statistische Eigenschaften eines beobachteten Phänomens betrachten. Dadurch werden nicht alle kritischen Ereignisse zuverlässig erkannt, insbesondere bei komplexen digitalen technischen Systemen.
Dementsprechend besteht ein Bedarf an einem Verfahren, mit dem die Ereignisse mit hoher Wahrscheinlichkeit rechtzeitig und zuverlässig erkannt werden.

Dabei ist es wünschenswert eine niedrige falsch-negative ("FN") Rate bei der Ereigniserkennung zu erzielen. Dadurch wird sichergestellt, dass mit höherer Wahrscheinlichkeit Ereignisse gemeldet werden, die im Sinne der zu erkennenden Eigenschaften tatsächlich keine Ereignisse sind. Diese Ereignisse gelten als Fehlalarme.

Andererseits ist eine hohe falsch-positiv ("FP") Rate problematisch, da diese den Nutzer des technischen Systems überfordern. Nachteilig daran ist, dass der Nutzer die erkannten und an ihn gemeldeten Ereignisse mit der Zeit nicht mehr ausreichend oder gar nicht mehr betrachtet. Daher ist es weiterhin wünschenswert die falsch-positiv Rate ebenfalls ausreichend gering zu halten.

Die vorliegende Erfindung stellt sich daher die objektive technische Aufgabe ein computer-implementiertes Verfahren zum Bereitstellen eines trainierten maschinellen Lernmodells zur Erkennung mindestens eines Ereignisses in Bezug auf ein technisches System bereitzustellen, welches zuverlässiger und effizienter ist.

### 3. Zusammenfassung der Erfindung

Die oben genannte Aufgabe wird erfindungsgemäß durch ein computer-implementiertes Verfahren zum Bereitstellen eines trainierten maschinellen Lernmodells zur Erkennung mindestens eines Ereignisses in Bezug auf ein technisches System gelöst; aufweisend die Schritte:
a. Bestimmen einer Mehrzahl von statistischen Ausgabewerten durch Anwenden einer Mehrzahl von unterschiedlichen statistischen Ansätzen auf einen Trainingsdatensatz für ein maschinelles Lernmodell; wobei
   der Trainingsdatensatz mindestens eine Zeitreihe oder mindestens einen Zeitreihenabschnitt mindestens einer Zeitreihe mit einer Mehrzahl von Messwerten einer bestimmten physikalischen Größe aufweist;
b. Kombinieren der Mehrzahl der statistischen Ausgabewerte mittels einer Entscheidungsregel in mindestens ein statistisches Label;
c. Kennzeichnen der mindestens einen Zeitreihe oder des mindestens einen Zeitreihenabschnitts der mindestens einen Zeitreihe des Trainingsdatensatzes mit dem mindestens einem zugehörigen statistischen Label; wobei
   das mindestens eine zugehörige statistische Label das mindestens eine Ereignis in Bezug auf das technische System kennzeichnet;
d. Trainieren des maschinellen Lernmodells auf Basis des gelabelten Trainingsdatensatzes zur Erkennung des mindestens einen Ereignisses in Bezug auf das technische System; und
e. Bereitstellen des trainierten maschinellen Lernmodells.

Dementsprechend ist die Erfindung auf ein computer-implementiertes Verfahren zum Bereitstellen eines trainierten maschinellen Lernmodells, bevorzugt überwachtes maschinelles Lernmodell ("trained supervised machine learning model") zur Erkennung eines oder mehrerer Ereignisse in Bezug auf ein technisches System gerichtet. Der Begriff "maschinelles Lernmodell" kann mit ML-Modell abgekürzt werden.

Mit anderen Worten resultieren die erfindungsgemäßen Verfahrensschritte in dem maschinellen Lernmodell, welches trainiert ist, als Ausgabe. Dieses kann auf einen aktuellen Datensatz mit mindestens einer Zeitreihe oder mindestens einem Zeitreihenabschnitt, der sich bevorzugt vom Trainingsdatensatz unterscheidet, angewendet werden.

Dabei kann das Lernmodell als ein beliebiges Modell im Bereich des Maschinellen Lernens ("machine learning") ausgebildet sein, wie neuronale Netze, Random Forests, Scalable Vector Machines, etc. Ferner dient das Lernmodell der Ereigniserkennung. Das Ereignis steht in Bezug auf das technische System oder ist mit diesem assoziiert, einschließlich seiner Einheiten oder seiner Umgebung.

Bevorzugt ist das technische System ein sicherheitskritisches System ("Safety Critical System", SCS) und kann eine oder mehrere Systemuntereinheiten oder Komponenten aufweisen.

In einem ersten Schritt wird eine Mehrzahl von statistischen Ausgabewerten ermittelt, bevorzugt in Form eines Vektors. Die Ermittlung der Ausgabewerte erfolgt durch Verwendung einer Mehrzahl von unterschiedlichen statistischen Ansätzen, wie für Änderungspunkt-, Anomalie-, oder Strukturbrucherkennung in Zeitreihendaten oder Segmentierung von Zeitreihendaten, die auf statistischen Kenngrößen, Stichprobenfunktionen oder Modelle, wie etwa Varianz, Mittelwert, Autokorrelation, Autoregression oder Autoencoder etc. beruhen. Folglich unterscheiden sich die statistischen Ansätze inhärent voneinander, dabei sind sie jedoch funktionell redundant und dienen somit auch dem gleichen Zweck, der Ereigniserkennung. Die Mehrzahl der statistischen Ansäte kann als Kombination oder auch als Set ausgelegt werden, folglich Kombination statistischer Ansätze ("KSA"). Beispielsweise kann eine gleiche Funktion mit mehreren unterschiedlichen Parametern verwendet werden. Alternativ können unterschiedliche Funktionen, unterschiedlieher Quellcode einer Funktion, unterschiedliche Rechenverfahren oder unterschiedliche Algorithmen verwendet werden.

Die statistischen Ansätze verwenden dabei jeweils den gleichen Datensatz, nämlich den Trainingsdatensatz, als Eingabe. Der Trainingsdatensatz umfasst einen oder mehrere Zeitreihenabschnitte oder eine oder mehrere Zeitreihen. Ein Zeitreihenabschnitt oder ein Zeitreihe umfassen dabei jeweils eine Mehrzahl von Messwerten einer bestimmten physikalischen Größe. Der Zeitreihenabschnitt kann auch als Datenfenster bezeichnet werden.

Dementsprechend resultieren die statistischen Ansätze jeweils in mindestens einen zugehörigen statistischen Ausgabewert. Der statistische Ausgabewert kann dabei als Bit (Binärziffer) ausgebildet sein. Ein Bit kann die Werte "0" oder "1" annehmen.

In einem zweiten Schritt wird die Mehrzahl der statistischen Ausgabewerte mittels einer Entscheidungsregel oder auch Regel in mindestens ein statistisches Label überführt oder kombiniert. Eine beispielhafte Entscheidungsregel ist die Mehrheitsregel, auch Mehrheitsprinzip genannt. Das statistische Label kann als Bitfolge oder Binärcode ausgebildet sein. Das statistische Label kann auch als Ereignisklasse bezeichnet werden.

Das statistische Label kann beispielsweise den folgenden Binärcode aufweisen: 10011. Für jeden statistischen Ansatz wird ein Bit anzeigt, ob der zugeordnete statistische Ansatz ein Ereignis erkannt hat (1) oder nicht (0). Im Beispiel 10011 bilden 5 statistische Ansätze eine Kombination statistischer Ansätze, wobei 3 der 5 Ansätze ein Ereignis erkennen und 2 der 5 Ansätze kein Ereignis erkennen. Die Mehrheit der statistischen Ansätze erkennt somit ein Ereignis.

Das statistische Label kann mindestens einen Kausalfaktor für das mindestens eine Ereignis in Bezug auf das technische System kennzeichnen. Ferner kann das statistische Label mindestens eine Alarmstufe für das mindestens eine Ereignis in Bezug auf das technische System kennzeichnen.

Die ersten beiden Verfahrensschritte können auch als Ensemble-Vorhersage bezeichnet werden. Die Zuverlässigkeit wird durch die Ensemble-Vorhersage signifikant erhöht und die Menge an erkannten Ereignissen wird signifikant reduziert. Das Ensemble kann dabei wie in einem Clustering Verfahren eingesetzt werden, wobei die Anzahl der Cluster vorab unbekannt ist und nicht festgesetzt werden muss.

In einem weiteren Schritt wird die Zeitreihe oder der Zeitreihendabschnitt des Trainingsdatensatzes mit dem zugehörigen statistischen Label gekennzeichnet. Mit anderen Worten wird der Zeitreihe oder dem Zeitreihenabschnitt ein Label oder Kennzeichnen zugeordnet. Dieser Schritt kann auch als Datenlabeling im Kontext des Maschinellen Lernens bezeichnet werden. Das zugehörige statistische Label kennzeichnet das Ereignis in Bezug auf ein technisches System.

In weiteren Schritten wird das maschinelle Lernmodell auf Basis des gelabelten Trainingsdatensatzes zur Erkennung des Ereignisses in Bezug auf das technische System trainiert und anschließend als trainiertes maschinelles Lernmodell bereitgestellt, welches unmittelbar anwendbar ist.

Das erfindungsgemäße Verfahren ermöglicht eine Zertifizierung des technischen Systems. Ferner erleichtert und unterstützt das erfindungsgemäße Verfahren die Anwendung in regulierten Bereichen, z. B. in sicherheitsrelevanten Anwendungen. Ferner ist das Verfahren vorteilhafterweise flexibel anwendbar auf eine oder mehrere Zeitreihen und somit auch Big Data. Ein weiterer Vorteil liegt darin, dass Falsch-Positiv, FP, Ereignisse reduziert werden während Falsch-Negativ, FN, Ereignisse hinreichend unwahrscheinlich bleiben. Dadurch werden die Akzeptanz und die Benutzbarkeit betroffener statistischer Ansätze verbessert.

Die Ensemble-Vorhersage (Technisches System-extern, off-premise) kann ein ML-Modell (Technisches System-intern, on-premise) weitgehend automatisiert erstellen (automated labeling) durch automatisierte Klassifikation in Form der statistischen Labels.

Bei Off-Premise wird durch eine Menge an Methoden der Datensatz gelabelt, das ML-Modell trainiert und das ML-Modell auf Basis von Nutzer-Feedback verbessert.

Bei On-Premise wird das trainierte ML-Modell ausgeführt und das Nutzer-Feedback gesammelt.

In einer Ausgestaltung ist der statistische Ansatz ein Ansatz, ausgewählt aus der Gruppe bestehend aus: eine Autoregression, ein PELT (Pruned Exact Linear Time)-Verfahren und eine Mittelwert-Varianz (mean variance). Dementsprechend kann die Anzahl der statistischen Ansätze sowie die Ansätze selbst beliebig und flexibel ausgewählt werden, vorteilhafterweise auch abhängig vom Anwendungsfall, dem Lernmodell, dem zugrundeliegenden technischen System und sonstigen Bedingungen. Beispielsweise kann die Software "R" verwendet werden, in welcher eine Vielzahl von Ansätzen zur Verfügung stehen. Unterschiedliche Funktionen und/oder Parameter können ausgewählt werden.

Ferner können Änderungspunkt-, Anomalie-, oder Strukturbrucherkennung in Zeitreihendaten oder Segmentierung von Zeitreihendaten, die auf statistischen Kenngrößen, Stichprobenfunktionen oder Modelle, wie etwa Varianz, Mittelwert, Autokorrelation, Autoregression oder Autoencoder etc. beruhen, Anwendung finden.

In einer weiteren Ausgestaltung ist das mindestens eine Ereignis sicherheitsrelevant, ein Änderungspunkt und/oder ein Umschaltpunkt.

In einer weiteren Ausgestaltung ist das mindestens eine Ereignis ein normaler Zustand, ein anomaler Zustand, ein Zustandswechsel des technischen Systems, ein Zustandswechsel einer Umgebung des technischen Systems oder ein Zustandswechsel einer Einheit des technischen Systems.

Dementsprechend kann das Ereignis in Bezug auf das technische System sicherheitsrelevant sein. Ein Zustandswechsel oder ein anomaler Zustand als Ereignis kann sich sicherheitskritisch auf das technische System oder eine Systemeinheit etc. auswirken. Die Ereignisse werden vorteilhafterweise zuverlässig und effizient erkannt.

In einer weiteren Ausgestaltung spiegeln die Messwerte einen aktuellen Zustand des technischen Systems wider, werden durch das technische System bereitgestellt und/oder werden durch eine Messeinheit des technischen Systems bereitgestellt.

In einer weiteren Ausgestaltung ist die physikalische Messgröße eine Größe, ausgewählt aus der Gruppe bestehend aus: Strom, Spannung, Leistung, Geräuschpegel und Kraft.

In einer weiteren Ausgestaltung ist die Entscheidungsregel eine Regel, ausgewählt aus der Gruppe bestehend aus: eine Mehrheitsregel, eine Gewichtungsregel, eine Bedeutungsregel und eine semantische Regel.

Das Ereignis, die Messgröße, die Regel können jeweils vorteilhafterweise beliebig und flexibel ausgewählt werden, abhängig vom Anwendungsfall, dem Lernmodell, dem zugrundeliegenden technischen System und sonstigen Bedingungen.

In einer weiteren Ausgestaltung weist das Verfahren weiterhin den folgenden Schritt auf:
Ergänzen des mindestens einen statistischen Labels durch mindestens eine zugehörige Expertenbeschreibung; wobei die mindestens eine Expertenbeschreibung bevorzugt mindestens einen Hinweis umfasst, der zur Erkennung des mindestens einen Ereignisses geführt hat.

In einer weiteren Ausgestaltung erfolgt die Ergänzung vor dem Bereitstellen des trainierten maschinellen Lernmodells, bevorzugt beim Trainieren.

In einer weiteren Ausgestaltung wird
- die mindestens eine Expertenbeschreibung in einer flüchtigen oder nicht flüchtigen Speichereinheit gespeichert und wird von dieser bereitgestellt, bevorzugt einer Datenbank oder einer Cloud, besonders bevorzugt in Form eines Knowledge Graphen, oder
- die mindestens eine Expertenbeschreibung durch einen Nutzer über eine Eingabeschnittstelle bereitgestellt.

Dementsprechend wird dem statistischen Label eine Expertenbeschreibung hinzugefügt. Die Expertenbeschreibung kann statistisch und/oder physikalisch fundierte Kausalfaktoren und/oder eine Alarmstufe (z.B. unkritisch - grün, Beobachtung erforderlich - orange, Intervention Erforderlich - rot) aufweisen. Mit anderen Worten fließt Expertenwissen mit ein. Die Kausalfaktoren können unterschiedliche Informationen oder Hinweise umfassen, wie einen Hinweis, der zur Erkennung des mindestens einen Ereignisses geführt hat sowie einen Hinweis über die mögliche systembezogene, physikalische Ursache des Ereignisses. Folglich liegt der Vorteil darin, dass die Zuverlässigkeit und Nützlichkeit der Ereigniserkennung weiterhin erhöht werden. Die Kausalfaktoren können aus einer Wissensbasis (z.B. Datenbank und Wissensgraph etc.) automatisch entnommen werden, die im Vorhinein interaktiv durch den Experten oder einen anderen Nutzer über eine Eingabeschnittstelle in die Wissensbasis eingegeben werden können. Die zu einem statistischen Label dazugehörigen Kausalfaktoren können auch automatisch mittels einer künstlichen Intelligenz (z.B. semantische Technologien und automatisiertes Reasoning etc.) in der Wissensbasis ermittelt und hinterlegt werden.

Die ML-Modelle geben Kausalfaktoren zu entdeckten Ereignissen in für Nutzer des technischen Systems verständlicher Form ab. Dabei können die Nutzer Details einsehen und das ML-Modell verbessern, indem die Nutzer die Kausalfaktoren verbessern und die Alarmstufen verfeinern, die ein ML-Modell zu den Ereignissen gibt und/oder die Fähigkeit des ML-Modells zum Entdecken von Ereignissen verbessern ("user validated feedback loop").

Alternativ können die Kausalfaktoren und/oder die Alarmstufe von einer Speichereinheit bereitgestellt werden. Diese Ergänzung kann beim Trainieren stattfinden, jedoch vor dem letzten Verfahrensschritt dem Bereitstellen.

In einer anderen Ausgestaltung kann eine Nutzerinteraktion im Sinne einer Mensch-Maschine-Interaktion auch für andere Anwendungen von Vorteil sein. Alternativ zur Ergänzung durch die Expertenbeschreibung kann dem Nutzer über die Eingabeschnittstelle das statistische Label und/oder weitere Daten wie die Ausgabewerte in Form des e.g. Vektors bereitgestellt werden, um gemäß einer Ausgestaltung das statistische Label zu bestätigen oder zu verwerfen, bei Verwerfung gegebenenfalls anzupassen.

Mit anderen Worten werden durch diese Ausgestaltungen in Bezug auf eine Nutzerinteraktion ein Mensch-in-der-Schleife Maschinelles Lernen ("Human-in-the-Loop machine learning") ermöglicht. Dieser Begriff bezeichnet die Interaktion zwischen Mensch und Systemen im Bereich des maschinellen Lernens ("machine learning systems"). Dadurch wird die Leistung von Mensch und/oder Maschine signifikant verbessert.

In einer weiteren Ausgestaltung weist das Verfahren weiterhin den Schritt auf: Anwenden des trainierten maschinellen Lernmodells auf mindestens eine aktuelle Zeitreihe oder mindestens einen aktuellen Zeitreihenabschnitt, der sich bevorzugt vom Trainingsdatensatz unterscheidet. Dementsprechend wird die bereitgestellte Ausgabe in Form des trainierten maschinellen Lernmodells zur Ereigniserkennung eingesetzt. Das ML-Modell erfüllt in der Einsatzphase die gleiche Aufgabe wie in der Trainingsphase. Das Lernmodell ist flexibel, nutzerfreundlich und effizient anwendbar auf unterschiedliche Zeitreihen und Messwerte.

In der Trainingsphase wird das ML-Modell "parametriert", im Fall eines Neuronalen Netzes werden Gewichte bestimmt. Dabei werden die Label-Vorhersagen errechnet mit dem Zweck die Gewichte anzupassen und die Vorhersage zu verbessern.

In der Anwendungsphase werden die Label-Vorhersagen (ggf. mit einer Bewertung wie sicher die Vorhersage ist), aber die Gewichte nicht mehr angepasst.

In einer weiteren Ausgestaltung weist das Verfahren weiterhin den Schritt auf: Durchführen einer Analyse auf Basis des erkannten mindestens einen Ereignisses nach Anwendung des trainierten maschinellen Lernmodells.

In einer weiteren Ausgestaltung weist das Verfahren weiterhin den Schritt auf: Einleiten mindestens einer Maßnahme in Abhängigkeit von der durchgeführten Analyse.

Dementsprechend wird nach der Ereigniserkennung eine Analyse durchgeführt. Die Analyse dient dazu zu ermitteln, ob eine oder mehrere Maßnahmen erforderlich sind und eingeleitet werden müssen. Beispielsweise ist das erkannte Ereignis sicherheitsrelevant oder sicherheits-kritisch. Ferner kann die Analyse ergeben, dass das Ereignis eine Auswirkung auf Mensch und/oder Maschine, wie technisches System oder Steuerung, hat. Die Auswirkung kann beispielsweise eine Fehlsteuerung des technischen Systems oder einer Einheit sein und die Sicherheit von Mensch und/oder Maschine gefährden. In diesem Fall kann eine Maßnahme zuverlässig und effizient eingeleitet werden, um die Gefahr zu beseitigen. Die Maßnahme kann die Abschaltung der Maschine betreffen oder auch die Durchführung weiterer Analyseschritte erfordern etc.

Folglich können eine oder mehrere Maßnahmen nach der Analyse eingeleitet werden. Die Maßnahmen können gleichzeitig, nacheinander oder auch stufenweise durchgeführt werden. Dadurch werden die Maßnahmen vorteilhafterweise zeitnah sowie effizient ergriffen. Somit wird ein Mensch- und/oder ein Maschinen-Schaden verhindert.

Die Erfindung betrifft ferner ein technisches System. Dementsprechend wird das erfindungsgemäße Verfahren durch ein technisches System durchgeführt. Das technische System kann ein oder mehrere Untereinheiten wie Recheneinheiten aufweisen. Beispielsweise können ein Verfahrensschritt oder mehrere auf einer Recheneinheit durchgeführt werden, wie Labeling und Training des Lernmodells. Andere Verfahrensschritte wie das Anwenden des trainierten Lernmodells können auf der gleichen oder einer anderen Recheneinheit durchgeführt werden. Zusätzlich kann das technische System auch Speichereinheiten etc. aufweisen.

In einer Ausgestaltung läuft die Ensemble-Vorhersage auf einer separaten (zweiten) Rechenvorrichtung, d. h. unabhängig von einer (ersten) Rechenvorrichtung auf der das technische System mit dem ML-Modell (wie Scorer) läuft, das mit Hilfe des Ensembles trainiert wurde. Der Grund hierfür ist, dass das Ensemble bei unbekannten Zeitreihen anfällig für Softwarefehler ist. Der Scorer eines ML-Modells in der Einsatzphase des technischen Systems (on-premise) ist schneller als die Ausführung des Ensembles (das auf zeitaufwändigen statistischen Berechnungsalgorithmen beruht) in der Trainingsphase (off-premise).

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein Ablaufdiagramm des erfindungsgemäßen Verfahrens.
- FIG 2: stellt schematisch das Verfahren gemäß einer Ausführungsform der Erfindung dar.
- FIG 3: stellt schematisch das Verfahren gemäß einer Ausführungsform der Erfindung dar.
- FIG 4: zeigt Trainingsdaten und dazugehörige statistische Labels gemäß einer Ausführungsform der Erfindung.
- FIG 5: stellt schematisch das Verfahren gemäß einer Ausführungsform der Erfindung dar.

### 5. Beschreibung der bevorzugten Ausführungsformen

Im Folgenden werden bevorzugte Ausführungsformen der vorliegenden Erfindung in Bezug auf die Figuren beschrieben.

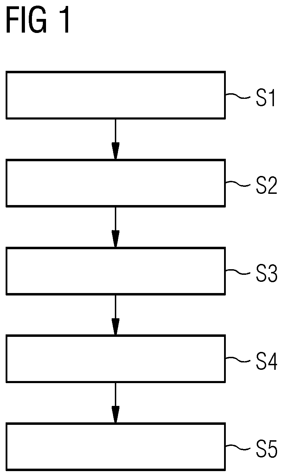

Figur 1 stellt ein Ablaufdiagramm des erfindungsgemäßen Verfahrens mit den Verfahrensschritten S1 bis S5 schematisch dar.

### Labeling des Trainingsdatensatzes für das maschinelle Lernmodell (Datenlabeling)

In einem ersten Schritt S1 wird die Mehrzahl der statistischen Ausgabewerte 22 durch Anwenden der Mehrzahl der unterschiedlichen statistischen Ansätze 20 auf einen Trainingsdatensatz 10 für das maschinelle Lernmodell bestimmt. Beispielhafte statistische Ansätze sind Autoregression, PELT ("Pruned Exact Linear Time") und Mittelwert-Varianz ("mean variance"). Der Trainingsdatensatz 10 weist die mindestens eine Zeitreihe oder den mindestens einen Zeitreihenabschnitt mit der Mehrzahl der Messwerte einer bestimmten physikalischen Größe auf. Beispielhafte physikalische Größen sind Strom, Spannung, Leistung, Geräuschpegel und Kraft etc. Aktuelle Messwerte spiegeln dabei den aktuellen und dynamischen Zustand des technischen Systems wider.

In einem weiteren Schritt S2 wird die Mehrzahl der statistischen Ausgabewerte 22 mittels der Entscheidungsregel in das mindestens eine statistische Label 12 kombiniert.

In einem weiteren Schritt S3 wird die mindestens eine Zeitreihe oder der mindestens eine Zeitreihenabschnitt des Trainingsdatensatzes 10 mit dem mindestens einen zugehörigen statistischen Label 12 gekennzeichnet. Das mindestens eine zugehörige statistische Label 12 kennzeichnet dabei das mindestens eine Ereignis in Bezug auf das technische System. Mit anderen Worten wird der Trainingsdatensatz 10 klassifiziert oder gelabelt, welcher anschließend für das maschinelle Lernmodell verwendet wird.

### Trainieren und Bereitstellen des trainierten maschinellen Lernmodells 40

In einem weiteren Schritt S4 wird das maschinelle Lernmodell auf Basis des gelabelten Trainingsdatensatzes 30 zur Erkennung des mindestens einen Ereignisses in Bezug auf das technische System trainiert. Das maschinelle Lernmodell wird im Folgenden auch mit ML-Modell abgekürzt. Das ML-Modell wird dahingehend trainiert, dass es in der Zeitreihe oder in dem Zeitreihenabschnitt Änderungspunkte und damit auch qualitativ unterschiedliche Segmente ("time series segmentation") erkennt.

In der Trainingsphase können die Experten Expertenbeschreibungen 14 mit den statistischen Labels 12 verknüpfen gemäß einer Ausführungsform. Ereignisse, die das ML-Modell in einer Zeitreihe oder einem Zeitreihenabschnitt entdeckt, besitzen ein statistisches Label und je eine zu einem statistischen Label passende Expertenbeschreibung abgestützt mit konkreten Ereignisparametern (wie Werte und Zeiten) und Parametern des statistischen Ansatzes, die zur Erkennung eines Ereignisses geführt haben.

Gemäß einer Ausführungsform wird in der Trainingsphase eine erste Rechenumgebung zum Trainieren des ML-Modells herangezogen. In der Einsatzphase wird hingegen eine zweite Rechenvorrichtung zum Ausführen des trainierten ML-Modells 40 mittels eines Modell-Scorers herangezogen. Die erste Rechenvorrichtung verwendet ein Experte, außerhalb des Einsatzbereiches des Entscheidungsunterstützungssystems (extern, off-premise). Die zweite Rechenvorrichtung verwendet einen Operator des Entscheidungsunterstützungssystems innerhalb des Einsatzbereiches des Entscheidungsunterstützungssystems (intern, on-premise). Dabei ist der Operator ein Nutzer des technischen Systems auf das sich die Ereigniserkennung bezieht und der dieses steuert. Beispielsweise ist der Operator der Bediener der Steuerungseinheiten in einem Kraftwerk oder im Zug der Triebwagenführer.

In einem weiteren Schritt S5 wird das trainierte maschinelle Lernmodell 40 bereitgestellt. Dementsprechend kann das ML-Modell in einer Recheneinheit, wie beispielsweise einem Entscheidungsunterstützungssystem ("EUS", "decision support system") eingesetzt werden und ist zur Erkennung von Ereignissen (wie Änderungspunkte oder Umschaltpunkte) eingerichtet, bevorzugt auf der Ebene von Prozesssteuerungen. Mit anderen Worten, führt das Entscheidungsunterstützungssystem das trainierte ML-Modell 40 automatisch aus. Das Entscheidungsunterstützungssystem kann das Ereignis, das statistische Label 12 und die Expertenbeschreibung 14 protokollieren.

Das trainierte ML-Modell 40 erkennt im operativen Einsatz (auch Einsatzphase genannt) verschiedene, normale und anomale Zustandswechsel (und damit Zustände) des technischen Systems oder der Umgebung des technischen Systems, bevorzugt abhängig von der physikalischen Größe.

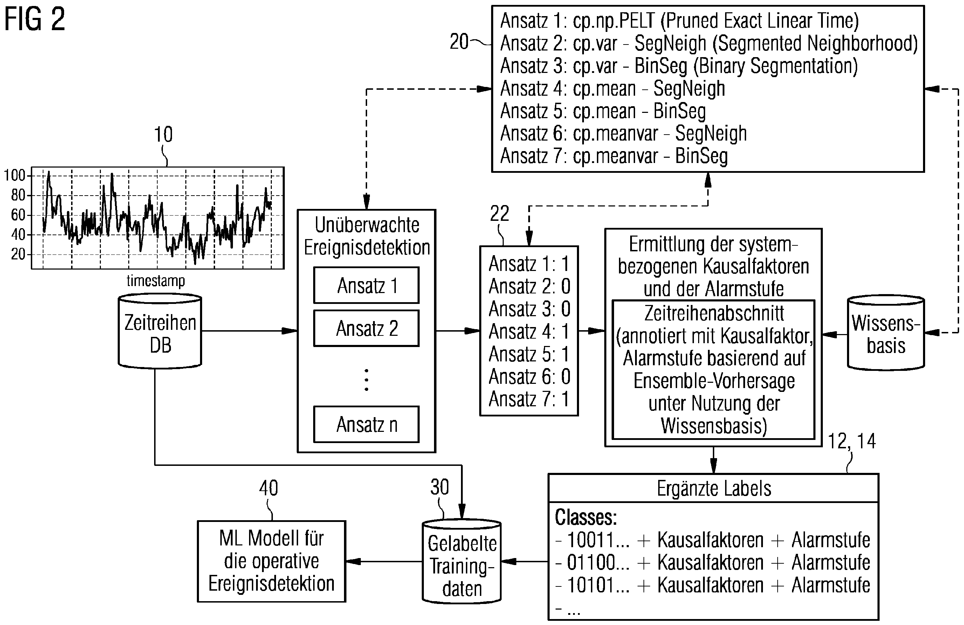

Figur 2 zeigt das Verfahren für das automatisierte statistische Labeln von Zeitreihen, die durch das Verfahren als Trainingsdatensatz aufbereitet werden, der zum Antrainieren eines ML-Modells für die schnelle, operative Ereigniserkennung verwendet wird.

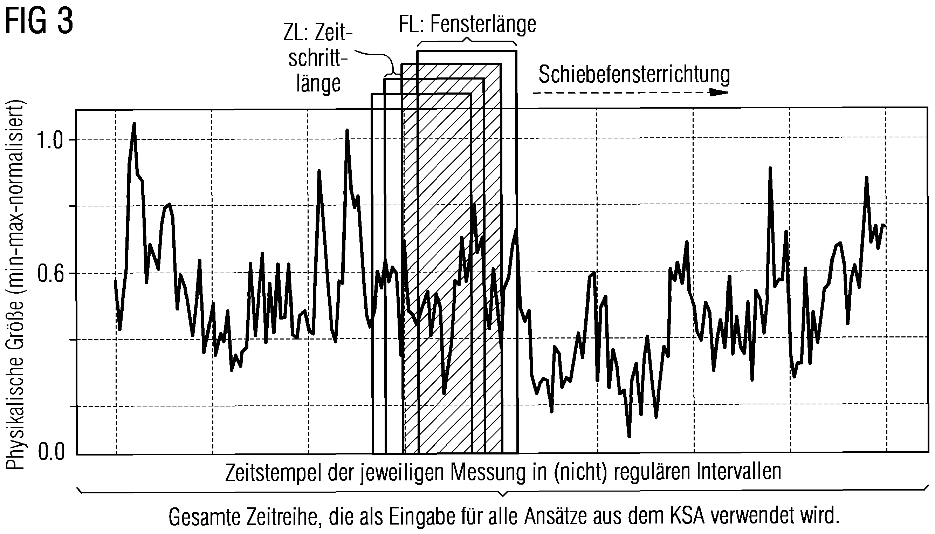

Figur 3 zeigt ein Schiebefensterverfahren, das der Ermittlung eines statistischen Labels für jeden Zeitreihenabschnitt auf Basis der Aussage der Kombination statistischer Ansätze dient. Mit anderen Worten werden die Daten segmentiert, in Zeitreihenabschnitte. Jedem Datenfenster wird ein Label 12 (oder Ereignisklasse) zugeordnet, welches der Aussage der Kombination statistischer Ansätze für das jeweilige Datenfenster entspricht.

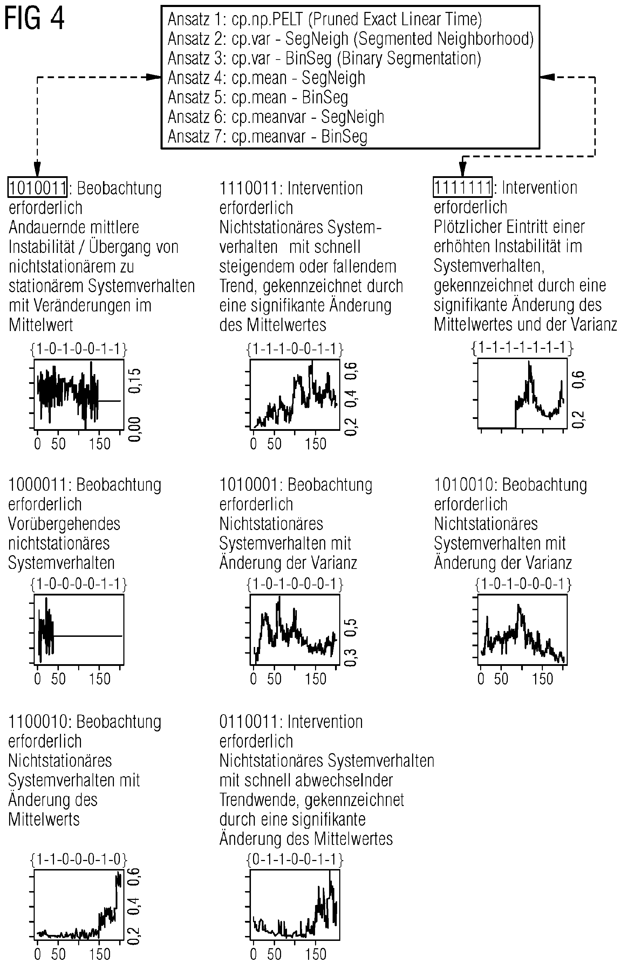

Figur 4 zeigt beispielhafte Trainingsdaten und dazugehörige statistische Labels.

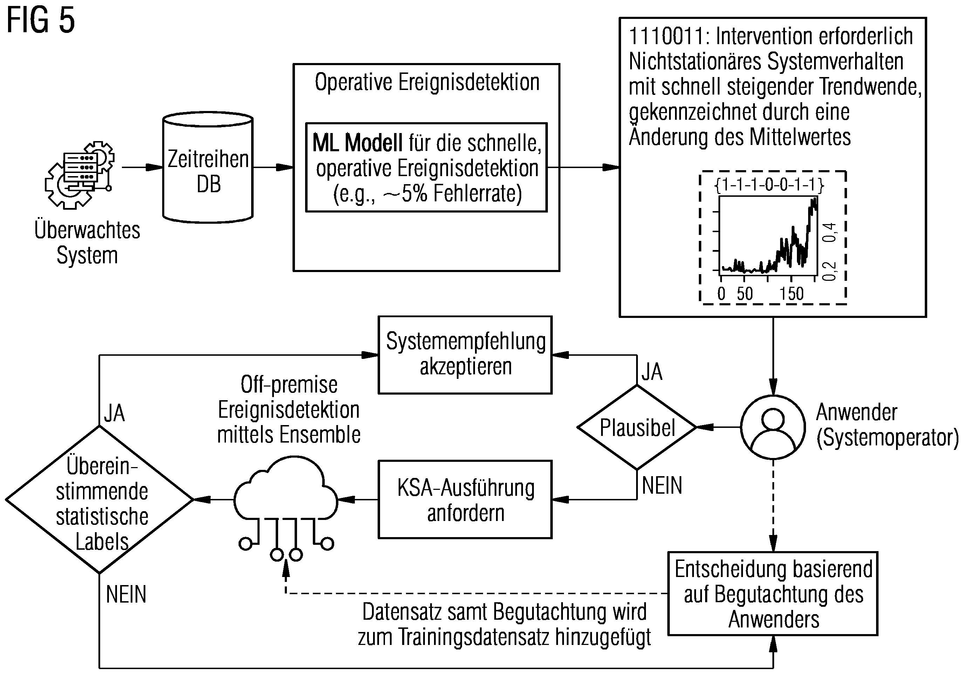

Figur 5 zeigt ein Ablauf des Verfahrens zur operativen Ereigniserkennung mittels eines ausgebildeten ML-Modells.

### Beispielhafte Aufgaben des Experten sind im Folgenden aufgelistet:

Der Experte erstellt und/oder ändert die statistischen Ansätze bzw. das Set oder die Kombination statistischer Ansätze. Hierzu kann der Experte geeignete statistische Ansätze und/oder geeignete Parameter auswählen, bevorzugt abhängig von der physikalischen Größe.

Weiterhin erklärt der Experte das statistische Label indem der Experte auf die Merkmale des Zeitreihenabschnitts, der Zeitreihe und/oder auf das eigene Fachwissen zurückgreift.

Weiterhin verwendet der Experte den gelabelten Trainingsdatensatz für das ML-Modell.

Der Experte gibt das trainierte ML-Modell frei. Das trainierte ML-Modell kann nach Freigabe angewendet werden, an eine Recheneinheit übertragen werden oder einem Operator automatisiert oder manuell bereitgestellt (deployed) werden, bevorzugt als Teil des Entscheidungsunterstützungssystems auf der zweiten Rechenvorrichtung.

### Beispielhafte Aufgaben des Operators oder Endbenutzers sind im Folgenden aufgelistet:

Der Operator analysiert das statistische Label eines kritischen Ereignisses, bevorzugt zusammen mit der zugeordneten Expertenbeschreibung.

Der Operator konfrontiert die Experten mit dem Sachverhalt, der sich aus dem betroffenen Datensatz ergibt. Dabei berücksichtigt der Operator relevante Teile (Sequenzen) der Zeitreihe oder des Zeitreihenabschnitts, bevorzugt abhängig von der physikalischen Größe, wie Strom, Spannung, Kraft, der zugehörigen Systemgröße, wie Geschwindigkeit, Schwingungen, Geräusche und/oder weiterer Kenngrößen.

Der Operator plausibilisiert die Ereignisse und die Analysen, bevorzugt durch Rückgriff auf Experten und trifft eine Entscheidung.

Falls das Ergebnis der Ereignisanalyse plausibel ist, kann der Operator eine Maßnahme einleiten, wie beispielsweise eine Intervention in das Systemverhalten, wenn das Ereignis eine Anomalie im Verhalten des technischen Systems anzeigt. Weitere Maßnahmen sind eine Anpassung von Betriebsparametern des technischen Systems und eine Weiterleitung des Ereignisses an eine andere Recheneinheit, Fachabteilung oder Stabstelle.

Falls das Ergebnis der Ereignisanalyse nicht plausibel ist, fordert der Operator eine Prädiktion (Analyse und Bewertung) von den statistischen Ansätzen an, mit denen das ML-Modell trainiert wurde.

Die Anforderung kann den betroffenen Datensatz (Zeitreihenabschnitt oder Zeitreihe), das statistische Label und die Expertenbeschreibung umfassen. Die Anforderung kann auf der ersten Rechenvorrichtung eine automatisierte Prädiktion des Datensatzes durch die statistischen Ansätze auslösen. Die Prädiktion kann eine statistische Erklärung in Form eines statistischen Labels abgeben.

Falls das statistische Label (die Prädiktion) der statistischen Ansätze nicht mit dem statistischen Label übereinstimmt, das das ML-Modell für den gleichen Datensatz berechnet hat, kann es erforderlich sein, dass der Experte Gründe für die unterschiedlichen statistischen Labels sucht.

Im anderen Fall, bei Übereinstimmung der statistischen Labels, kann der Experte die unterschiedlichen Sichten auf die statistischen Labels, die Expertenbeschreibungen und den Datensatz mit dem Operator klären. Zu diesem Zweck kann der Experte den Datensatz qualitativ und/oder strukturell analysieren. Gegebenenfalls kann der Experte vom Operator weitere Informationen zum beobachteten Sachverhalt anfordern.

Weiterhin kann der Experte die statistischen Ansätze und/oder die Expertenbeschreibungen anpassen, dass sie zum Datensatz passen, den der Operator geliefert hat. Folglich kann eine statistisch, sachlich und fachlich konsistente Prädiktion samt passender Expertenbeschreibung für diesen sowie für gleichartige Datensätze bereitgestellt werden. Im Zuge der Anpassung der statistischen Ansätze kann der Experte die Parameter der statistische Ansätze und/oder die Zusammenstellung der statistische Ansätze, die das Set oder die Kombination bilden, ändern.

Falls die statistischen Ansätze ein neues statistisches Label (eine neue Prädiktion) erzeugen, kann der Experte eine dazu passende Expertenbeschreibung abgeben. Anschließend kann der Experte Regressionstests und/oder Back-to-Back Tests ausführen und einen oder mehrere der obigen Verfahrensschritte durchführen.

Falls die statistischen Ansätze das gleiche statistische Label (die gleiche Prädiktion) erzeugen, wie das ML-Modell, kann der Experte die Expertenbeschreibung des statistischen Labels in der Datenbank anpassen oder der Operator kann eine Expertenbeschreibung zu dem statistischen Label, bevorzugt in einem Anlagen- oder Domänen-spezifischen Teil der Datenbank, hinzufügen.

### Labeling des Trainingsdatensatzes für das maschinelle Lernmodell (Datenlabeling) gemäß einer Ausführungsform

Zu einem einer Kombination statistischer Ansätze gehören mehrere, in ihrer Funktion redundante jedoch algorithmisch, d. h., semantisch, verschiedene statistische Ansätze (Methode 1, ..., Methode n und somit N Methoden). Jeder Ansatz trifft dabei eine binäre oder probabilistische Aussage zu einer zeitveränderlichen Größe des technischen Systems bezogen auf ein Zeitreihenabschnitt einer bestimmten Länge. Somit entsteht für jeden Zeitreihenabschnitt der Länge L eine kodierte Aussage in Form einer Signatur von n Binärzahlen. Diese Signatur wird als statistisches Label bezeichnet. Jedes statistische Label charakterisiert einen Zustand bzw. Zustandswechsel (Ereignis) des technischen Systems bezogen auf die physikalische Größe.

Falls die Mehrheit oder eine vom Experten autorisierte Minderheit der statistischen Ansätze eine statistisch signifikante Änderung des Zeitreihenabschnitts oder der Zeitreihe erkennt, wird die Genauigkeit, Zuverlässigkeit und Akzeptanz der automatisierten Ereigniserkennung, im Vergleich mit Werten, die einzelne statistische Ansätze liefern, verbessert. Ferner trägt ebenfalls der iterative Prozess der wechselseitigen Prüfung und Anpassung der statistischen Ansätze und des ML-Modells zur Verbesserung bei.

Für die Bildung und Anpassung der statistischen Ansätze kann eine Datenbank verwendet werden, welche die Zeitreihenabschnitte oder die Zeitreihen speichert. Dabei kann ein Zeitreihenabschnitt ein vollständiger Datensatz, ein langer Datensatz, eine Zeitreihe oder eine Datenreihe sein, der bevorzugt die komplette oder eine lange Operationszeit des technischen Systems abdeckt. Mit den Zeitreihen sollen alle Kombinationen von Aussagen der statistischen Ansätze erfasst und untersucht werden. Der Experte wählt und parametriert die einzelnen statistischen Ansätze derart, dass die statistischen Ansätze relevante Ereignisse zuverlässig erkennen. Relevant sind Ereignisse, die z. B. auf mögliche oder tatsächliche Schäden hinweisen, bevorzugt im Zusammenhang mit Funktionen von technischen Systemen, wie sicherheitskritische technische Systeme, die eine kritische Infrastruktur betreiben. Die Zahl falsch-negativer Ereignisse und falsch-positiver Ereignisse in qualifizierten Zeitreihen bestimmt die Güte der Auswahl und Einstellung der statistischen Ansätze. Die Zahl falsch-negativer Ereignisse soll eliminiert werden und die Zahl falsch-positiver Ereignisse soll minimiert werden. Die Auswahl und die Einstellung der statistischen Ansätze erfolgen typischerweise iterativ.

Die statistischen Ansätze und das ML-Modell wenden gemäß einer Ausführungsform ein Schiebefenster an, um einen langen, potentiell unbeschränkten Zeitreihenabschnitt zu analysieren. Ein Datenfenster der Länge FL wird um die Zeitschrittlänge ZL verschoben. Ein beispielhafter Datensatz mit einer Länge 10000, einer Fensterlänge FL = 200 und einer Zeitschrittlänge ZL = 10 ergibt 1000 Aussagen der statistischen Ansätze, die sich jeweils auf ein Datenfenster der Länge 200 beziehen. FL und ZL sind Parameter der statistischen Ansätze und gelten für jeden statistischen Ansatz der Kombination.

Die Erfahrung zeigt, dass die Zahl unterschiedlicher, relevanter statistischer Label saturiert, d. h. auf eine Zahl verschiedener Klassen begrenzt. Daher muss ein Experte vorteilhafterweise von allen kombinatorisch möglichen statistischen Labels nur einen Teil näher analysieren. Die statistischen Labels zeigen die Ereignisse der physikalischen Größe an. Typischerweise sind die statistischen Labels Signaturen, in denen die Mehrheit der statistischen Ansätze eine Änderung anzeigen.

Der gelabelte Trainingsdatensatz wird zum Trainieren des ML-Modells verwendet. Dazu werden Datensätze der Länge FL und die statistischen Label in Form von Signaturen der Länge n verwendet.

Die statistischen Label kodieren Informationen über die Natur der Ereignisse. Die Art, die Zahl und die Parameterwerte der statistischen Ansätze, welche das statistische Label berechnen, fließen in die Aussage mit ein, ebenso wie die einem statistischen Label zugeordneten Zeitreihenabschnitte.

Falls ein statistischer Ansatz Änderungen des Mittelwerts über eine bestimmte Periode überwacht, zeigt eine positive Aussage des statistischen Ansatzes (1 in der Signatur an der Stelle, die diesem statistischen Ansatz zugeordnet ist) eine abrupte Trendwende in der gemessenen physikalischen Größe und somit im Systemverhalten an.

Falls ein anderer statistischer Ansatz Änderungen der Varianz über eine bestimmte Periode überwacht, zeigt eine positive Aussage dieses statistischen Ansatzes einen plötzlichen, auffällig hohen oder auffällig tiefen, möglicherweise anormalen Ausreißer, vielleicht einen Stoß, in der überwachten, physikalischen Größe (im Systemverhalten) an.

Andere statistische Ansätze, etwa ein Autoregressor oder Autoencoder, können Übergänge von einem Systemzustand in einen anderen Systemzustand erkennen.

Werden die Aussagen der einzelnen statistischen Ansätze kombiniert, die durch statistische Labels codiert werden, gewinnt ein Experte eine detaillierte Einsicht in das Verhalten des technischen Systems bezüglich der physikalischen Größe.

Weitere statistische Ansätze können aus dem Bereich der Zeitreihendarstellung ("time series representation") herangezogen werden.

Jedes statistische Label zeigt ein Ereignis an, das durch eine Kombination von statistischen Merkmalen gekennzeichnet wird. Jedes Ereignis kann gemäß einer Ausführungsform durch eine Expertenbeschreibung ergänzt werden. Für die Expertenbeschreibung kann der Experte technische Dokumente heranziehen, die das Verhalten und/oder das Fehlverhalten des technischen Systems dokumentieren. Dazu gehören auch beispielsweise Ergebnisse von Systemrisikoanalysen, wie Hazard Analysis und Failure Mode and Effect Analysis, Regellisten, semantischen Datenbanken oder Wissensgraphen.

Für den beispielhaften Fall einer akustischen Überwachung, etwa des Geräuschpegels in einem operativen Kontext, kann ein auf dem vorliegenden Verfahren beruhendes digitalisiertes technisches System (DTS) eine sprachbasierte Steuerung automatisch ein- oder ausschalten sobald eine bekannte, bzw. unbekannte Stimme erkannt wird.

Das antrainierte ML-Modell kann dem Operator bereitgestellt werden, bevorzugt inklusive der mit den SL verknüpften Expertenbeschreibungen des Experten. Auf diese Weise erklärt das EUS einem Operator des DTS die statistischen Aussagen des ML-Modells in Form von SL. Der Operator zieht die Expertenbeschreibung und die betroffenen Datensegmente zur Prüfung der Plausibilität Echtheit der Ereignisse und zur Entscheidung über angemessene Ereignisreaktionen (oder Maßnahmen) heran.

Der Operator verwendet das EUS mit dem ML-Modell zur online oder offline Detektion von Ereignissen.

Wenn die SL (die Prädiktionen) von der Kombination statistischer Ansätze (erzeugt extern, off-premise) und vom ML-Modell (erzeugt intern, on-premise) nicht übereinstimmen, dann hat der Experte folgende Aufgaben:
(a) Aufnahme des vom Operator validierten Datensatzes, der zum statistischen Label (zur Prädiktion) des ML-Modell gehören (user-validated input case), in die Zeitreihen-Datenbank;
(b) fallweise Anpassung der Kombination statistischer Ansätze durch Hinzufügen, Ersetzen oder Entfernen von Ansätzen und/oder
(c) Anpassung von ausgewählten Parametern einzelner Ansätze.

Der Experte kann die Anpassungen mit gängigen Regressionstests und/oder Back-to-Back Tests validieren und dabei fallweise auch den Operator einbinden.

### Anwendungsfälle:

### Ereignisüberwachung eines Niederspannungsnetzes:

Das erfindungsgemäße Verfahren entdeckt und erklärt außergewöhnliche Ereignisse in einem Niederspannungsnetz und hilft damit, die Stromversorgung aufrechtzuerhalten, zu optimieren und die Infrastruktur der Stromversorgung zu schützen.

### Bohrtiefenabweichung:

Das erfindungsgemäße Verfahren entdeckt Probleme und Fehler im Verhalten einer Maschine und liefert dazu verständliche Expertenbeschreibungen, z. B. von möglichen Ursachen, so dass ein Maschinenoperator schnell und wirksam handeln kann.

### Kraftüberwachung bei der Mensch-Roboter Kollaboration:

Das erfindungsgemäße Verfahren hilft unnötige Sicherheitstops und somit unproduktive Stillstände von kollaborativen Robotern zu vermeiden.

### Sichere Sprachsteuerung (Safe Voice Control):

Das erfindungsgemäße Verfahren erleichtert die Kommunikation mit technischen Geräten durch Sprachkommandos in Situationen, die schnelle und direkte Kommunikation mit den technischen Geräten erfordern und bei Problemen eine zeitnahe Erläuterung an den Nutzer über die Ursache.

### Ausfallvorhersage:

Das erfindungsgemäße Verfahren erleichtert das Verständnis von Ursachen und Wahrscheinlichkeiten drohender Ausfälle von Systemkomponenten.

### Pseudocode für das Datenlabeling:

**Eingabe:** Zeitschrittlänge ZL
Fensterlänge *FL*
Zeitreihen *TS = {S_1, S_2,* ...*}*
Kombination statistischer Ansätze K = *{A_1*, *A_2,*
...*}*
**Ausgabe:** Statistische Labels *SL*

### ANFANG Labeln:

Für jeden Ansatz A i aus der Kombination K:
Für jedes Zeitreihenabschnitt oder jede Zeitreihe *S_j* in *TS:*
Ermittele einen Ereignisvektor *E(A_i,S_j) = A_i(S_j),* der die Indizes der Ereignisse in dem jeweiligen Zeitreihenabschnitt oder in der jeweiligen Zeitreihe enthält
Für jedes Datenfenster d der Länge *FL* im Zeitreihenabschnitt oder in der Zeitreihe S_j mit Zeitschrittlänge ZL:
   Ermittele das statistische Label:
   *SL(S_j,d)* = 1 wenn in *E(A_i,S_j)* ein Ereignis für mindestens einen Index Innerhalb des Datenfensters d in Bezug
      auf
   den Zeitreihenabschnitt oder der Zeitreihe existiert;
   sonst
   *SL(S_j,d) = 0*

### Retourniere SL

### ENDE Labeln

Erläuterung zur Zusammensetzung und Aussagekraft der statistischen Label:
Die Ausführung der Kombination statistischer Ansätze für ein Datenfenster d und ein Zeitreihenabschnitt oder eine Zeitreihe S ergibt einen statistischen Label der Form *SL(S, d)* = *{0,1,0,1,1,...},* wobei die Länge dieses Vektors mit der Anzahl der Ansätze in der Kombination gleich ist.

Die Zusammensetzung der Kombination statistischer Ansätze können Hinweise darüber liefern welche Kausalfaktoren Veränderungen bestimmter statistischer Kenngrößen verursacht haben (z.B. Varianz, Mittelwert, etc.), da jedes Bit im statistischen Label mit einer bestimmten statistischen Kenngröße und einem bestimmten heuristischen Ansatz zur Bestimmung dieser Kenngröße verknüpft ist. Betrachtet wird beispielsweise folgende Kombination statistischer Ansätze basierend auf dem "changepoint" R-Paket:
- Ansatz 1: cp.np.PELT (Pruned Exact Linear Time)
- Ansatz 2: cp.var - SegNeigh (Segmented Neighborhood)
- Ansatz 3: cp.var - BinSeg (Binary Segmentation)
- Ansatz 4: cp.mean - SegNeigh
- Ansatz 5: cp.mean - BinSeg
- Ansatz 6: cp.meanvar - SegNeigh
- Ansatz 7: cp.meanvar - BinSeg

Ein erster Ansatz basiert auf dem PELT Ansatz, der eine Kostenfunktion verwendet, die auf mehrere statistische Kenngrößen beruht, um Änderungspunkte in Zeitreihendaten zu erkennen.

Die Ansätze 2, 3, 4 und 5 betrachten die Varianz bzw. den Mittelwert als statistische Kenngrößen und verwenden jeweils unterschiedliche Rechenverfahren oder Heuristiken (SeqNeigh, BinSeq).
Die Ansätze 6 und 7 betrachten sowohl die Varianz als auch den Mittelwert unter Verwendung unterschiedlicher Rechenverfahren.

Die Zusammensetzung der Kombination statistischer Ansätze und des SL bietet somit Maschinen- und Menschenlesbare Informationen bezüglich der wahrscheinlichen Kausalfaktoren, die zu einer Änderung im Systemverhalten geführt haben könnten. Aufgrund eines erkennbaren Änderungspunktes in den Zeitreihendaten, für den es eine durch das SL gelieferte statistische Begründung gibt, können Rückschlüsse hinsichtlich möglicher systembezogener Kausalfaktoren gezogen werden. Wie in Fig. 4 gezeigt wird, signalisiert eine Mittelwertänderung ein nichtstationäres Systemverhalten mit schnell steigendem oder fallendem Trend (siehe z.B. SL = 1110011 in Fig. 4). Durch die Betrachtung der Aussagen der anderen Ansätze in der Kombination statistischer Ansätze (z.B. Ansatz 1 - PELT) kann eine Unterscheidung zwischen einem nichtstationären Systemverhalten mit monoton steigendem oder fallendem Trend (SL = 1110011) und mit abwechselnder Trendwende (SL = 0110011) erfolgen. Aufgrund der Hinweise aus der Wissensbasis gemäß Fig. 1, werden unterschiedlichen statistischen Labels automatisch oder manuell ermittelte Kausalfaktoren zugeordnet (siehe Beschreibungen der jeweiligen SLs in Fig. 4). Zusätzlich kann jedem SL auch eine Alarmstufe (z.B. unkritisch, Beobachtung erforderlich, Intervention erforderlich) zugeordnet werden, die sich aus dem in der Wissensbasis enthaltenen Fachwissen und semantischen Zusammenhänge ergibt. Je nach SL und zugeordneter Alarmstufe bedarf es einer automatisierten (z.B. Systemausschaltung) oder menschlichen Intervention, beispielsweise bei einer Trendwende (SL = 1110011 oder 0110011) sowie beim plötzlichen Eintritt einer erhöhten Instabilität im Systemverhalten, wie gekennzeichnet durch eine signifikante Änderung des Mittelwertes und der Varianz (SL = 1111111). Hingegen bedarf es bei anderen erkannten Änderungen im Systemverhalten (gekennzeichnet z.B. mit den SL = 1010011, 1000011, 1100010, 1010001, oder 1010010) nur einer Beobachtung durch das System oder einen Operator des Systems. Aus den Beispielen in Fig. 4 ist ersichtlich, dass eine reine Mehrheitsregel bezogen auf die binäre Zusammensetzung eines SLs nicht allein aufschlussgebend für die Alarmstufe ist. Um die Alarmstufe zu ermitteln ist auch die Position des jeweiligen positiv belegten Bits im SL wichtig. Somit spielt hier auch Expertenwissen, das in der Wissensbasis semantisch konsistent dargestellt werden kann, eine wichtige Rolle.

Gleichzeitig verbessert die Zusammensetzung der Kombination statistischer Ansätze die Zuverlässigkeit der Ereigniserkennung durch die Verwendung verschiedener, redundanter, funktional äquivalenter Ansätze, die die gleiche statistische Kenngröße mittels unterschiedlicher Rechenverfahren (z.B. SeqNeigh und BinSeq) berechnen. Somit kann einem SL = 1111111 oder 1110011, bei welchen Konsens zwischen unterschiedlichen Rechenverfahren herrscht, die dieselben statistischen Kenngrößen ermitteln, mit höherer Sicherheit die Alarmstufe "Intervention erforderlich" zugeordnet werden als, beispielsweise, bei einem SL=1010010, das keinen Konsens zwischen den verwendeten unterschiedlichen Rechenverfahren aufweist.

Durch die Kombination der Merkmale des SLs, die gleichzeitig einen Hinweis über Kausalität, eine Alarmstufe sowie einen Zuverlässigkeitsindikator verkörpern, wird der vorteilhafte Effekt erzielt, dass die Anzahl der falsch positiven Alarme minimiert wird. Gleichzeitig wird durch die Kombination von empfindlicheren Ansätzen (wie etwa PELT und cp.meanvar) mit robusteren Ansätzen (wie cp.mean und cp.var) sichergestellt, dass auch die falsch negativen Aussagen minimiert werden. Dabei "moderieren" oder schwächen die Letzteren die Aussagenaussagen der Ersteren, ohne sie komplett auszuschalten. Durch die Zuordnung zusätzlicher Alarmstufen in der Wissensbasis können auch SLs, bei denen nur die empfindlichsten Methoden einen Änderungspunkt erkennen, entsprechend der einschlägigen Betriebsrichtlinien eines überwachten Systems behandelt werden. Dies kann beispielsweise durch Speichern oder Loggen nichtkritischer Alarme für spätere "root cause" Analysen erfolgen, die langfristig zur Verbesserung des Betriebes helfen können.

### Bezugszeichen

- S1 bis S5: Verfahrensschritte 1 bis 5
- 10: Trainingsdatensatz
- 12: statistischer Label
- 14: Expertenbeschreibung
- 20: statistischer Ansatz
- 22: statistischer Ausgabewert
- 30: gelabelter Trainingsdatensatz
- 40: trainiertes maschinelles Lernmodell

## Patentansprüche

1. Computer-implementiertes Verfahren zum Bereitstellen eines trainierten maschinellen Lernmodells (40) zur Erkennung mindestens eines Ereignisses in Bezug auf ein technisches System; aufweisend die Schritte:
a. Bestimmen einer Mehrzahl von statistischen Ausgabewerten (22) durch Anwenden einer Mehrzahl von unterschiedlichen statistischen Ansätzen (20) auf einen Trainingsdatensatz (10) für ein maschinelles Lernmodell (S1); wobei
der Trainingsdatensatz (10) mindestens eine Zeitreihe oder mindestens einen Zeitreihenabschnitt mindestens einer Zeitreihe mit einer Mehrzahl von Messwerten einer bestimmten physikalischen Größe aufweist;
b. Kombinieren der Mehrzahl der statistischen Ausgabewerte (22) mittels einer Entscheidungsregel in mindestens ein statistisches Label (12) (S2);
c. Kennzeichnen der mindestens einen Zeitreihe oder des mindestens einen Zeitreihenabschnitts der mindestens einen Zeitreihe des Trainingsdatensatzes (10) mit dem mindestens einem zugehörigen statistischen Label (12) (S3); wobei
das mindestens eine zugehörige statistische Label (12) das mindestens eine Ereignis in Bezug auf das technische System kennzeichnet;
d. Trainieren des maschinellen Lernmodells auf Basis des gelabelten Trainingsdatensatzes (30) zur Erkennung des mindestens einen Ereignisses in Bezug auf das technische System (S4); und
e. Bereitstellen des trainierten maschinellen Lernmodells (40) (S5).

2. Computer-implementiertes Verfahren nach Anspruch 1, wobei der statistische Ansatz (20) ein Ansatz ist, ausgewählt aus der Gruppe bestehend aus:
eine Autoregression, ein PELT Verfahren und eine Mittelwert-Varianz.

3. Computer-implementiertes Verfahren nach Anspruch 1 oder Anspruch 2, wobei das mindestens eine Ereignis sicherheitsrelevant ist, ein Änderungspunkt und/oder ein Umschaltpunkt ist.

4. Computer-implementiertes Verfahren nach einem der vorhergehenden Ansprüche, wobei das mindestens eine Ereignis ein normaler Zustand, ein anomaler Zustand, ein Zustandswechsel des technischen Systems, ein Zustandswechsel einer Umgebung des technischen Systems oder ein Zustandswechsel einer Einheit des technischen Systems ist.

5. Computer-implementiertes Verfahren nach einem der vorhergehenden Ansprüche, wobei die Messwerte einen aktuellen Zustand des technischen Systems widerspiegeln, durch das technische System bereitgestellt werden und/oder durch eine Messeinheit des technischen Systems bereitgestellt werden.

6. Computer-implementiertes Verfahren nach einem der vorhergehenden Ansprüche, wobei die physikalische Messgröße eine Größe ist, ausgewählt aus der Gruppe bestehend aus:
Strom, Spannung, Leistung, Geräuschpegel, Temperatur, Kraft, Drehmoment und Geschwindigkeit.

7. Computer-implementiertes Verfahren nach einem der vorhergehenden Ansprüche, wobei die Entscheidungsregel eine Regel ist, ausgewählt aus der Gruppe bestehend aus:
eine Mehrheitsregel, eine Gewichtungsregel, eine Bedeutungsregel und eine semantische Regel.

8. Computer-implementiertes Verfahren nach einem der vorhergehenden Ansprüche, weiterhin aufweisend den Schritt
Ergänzen des mindestens einen statistischen Labels (12) durch mindestens eine zugehörige Expertenbeschreibung (14) ;
wobei die mindestens eine Expertenbeschreibung (14) mindestens einen Hinweis umfasst, der zur Erkennung des mindestens einen Ereignisses geführt hat.

9. Computer-implementiertes Verfahren nach Anspruch 8, wobei die Ergänzung vor dem Bereitstellen des trainierten maschinellen Lernmodells (40) erfolgt, bevorzugt beim Trainieren.

10. Computer-implementiertes Verfahren nach Anspruch 8 oder Anspruch 9, wobei
- die mindestens eine Expertenbeschreibung (14) in einer flüchtigen oder nicht flüchtigen Speichereinheit gespeichert und von dieser bereitgestellt wird, bevorzugt einer Datenbank oder einer Cloud, besonders bevorzugt in Form eines Knowledge Graphen, oder
- die mindestens eine Expertenbeschreibung (14) durch einen Nutzer über eine Eingabeschnittstelle bereitgestellt wird.

11. Computer-implementiertes Verfahren nach einem der vorhergehenden Ansprüche, weiterhin aufweisend den Schritt:
Anwenden des trainierten maschinellen Lernmodells (40) auf mindestens eine aktuelle Zeitreihe oder mindestens einen aktuellen Zeitreihenabschnitt, der sich bevorzugt vom Trainingsdatensatz (10) unterscheidet.

12. Computer-implementiertes nach Anspruch 11, weiterhin aufweisend den Schritt:
Durchführen einer Analyse auf Basis des erkannten mindestens einen Ereignisses nach Anwendung des trainierten maschinellen Lernmodells (40).

13. Computer-implementiertes Verfahren nach Anspruch 12, weiterhin aufweisend den Schritt:
Einleiten mindestens einer Maßnahme in Abhängigkeit von der durchgeführten Analyse.

14. Technisches System zum Durchführen des computerimplementierten Verfahrens nach einem der vorhergehenden Ansprüche.

15. Computerprogrammprodukt mit einem Computerprogramm, das Mittel zur Durchführung des Verfahrens nach einem der Ansprüche 1 bis 13 aufweist, wenn das Computerprogramm auf einer programmgesteuerten Einrichtung zur Ausführung gebracht wird.
